# EUROPEAN PATENT SPECIFICATION

(11) **EP 3 172 721 B1**
(45) Date of publication and mention of the grant of the patent: **05.06.2019**
(21) Application number: 14757852.0
(22) Date of filing: 24.07.2014
(51) Int. Cl.: G06T 19/00

(54) **METHOD AND SYSTEM FOR AUGMENTING TELEVISION WATCHING EXPERIENCE**
VERFAHREN UND SYSTEM ZUR ERWEITERUNG EINER FERNSEHERFAHRUNG
PROCÉDÉ ET SYSTÈME POUR AUGMENTER UNE EXPÉRIENCE DE VISUALISATION DE TÉLÉVISION

(43) Date of publication of application: 31.05.2017
(73) Proprietor: Deutsche Telekom AG, 53113 Bonn (DE)
(72) Inventor: HUANG, Zhanpeng, Hong Kong 999077 (CN); HUI, Pan, Hong Kong 999077 (CN); PEYLO, Christoph, 49401 Damme (DE)
(74) Representative: Vossius & Partner Patentanwälte Rechtsanwälte mbB
(86) International application number: PCT/EP2014/065912
(87) International publication number: WO 2016/012044

(56) References cited:
- WO-A1-2013/145536
- US-A1- 2011 096 093
- US-A1- 2011 216 002
- "Visual SyncAR breaks the fourth wall, brings TV content into your living room #DigInfo", , 18 February 2013 (2013-02-18), XP054975900, Retrieved from the Internet: URL:https://www.youtube.com/watch?v=8NHw9W u0CLw [retrieved on 2015-06-04]
- KAWAKITA HIROYUKI ET AL: "Augmented TV: An augmented reality system for TV programs beyond the TV screen", 2014 INTERNATIONAL CONFERENCE ON MULTIMEDIA COMPUTING AND SYSTEMS (ICMCS), IEEE, 14 April 2014 (2014-04-14), pages 955-960, XP032651652, DOI: 10.1109/ ICMCS.2014.6911158 [retrieved on 2014-09-25]

## Description

The invention relates to a method and system for augmenting television watching experience. Both the method and the system augment the television watching experience in an augmented mixed reality environment.

Augmented reality is a technology to supplement the real world by overlaying computer-generated virtual contents on the view of real environment to create a new mixed environment in which a user can see both the real and virtual contents in his or her field of view. Augmented reality is particularly applicable when users require informational support for a task while the user still needs to focus on that task. Augmented reality has the potential to allow users to interact with information without getting distracted from the real world. With optical see-through or video see-through display terminals, users are able to interact with virtual contents without losing attention to the real world environment.

Up to now, there is little or no focus on the potential synergy of integrating augmented reality technology with a television environment to augment the television watching experience. Traditional television watching is a passive activity as television viewers sit in front of the television and watch predefined programs that are broadcasted by content providers. Television viewers are often restricted to switch programs between different channels with a remote controller. Especially, when television viewers have questions about the running television program, for instance, information on the name of an actor or actress, magazines or other Internet-connected electronic devices have to be used to search for the respective answer. This search, however, will interrupt the television watching experience. Several smart television sets are equipped with an Internet connection and/or secondary screen functions. With these smart features, it might not be required for television viewers to leave from television set, but the Internet program and extra information displayed may obscure or even replace the current program. Therefore, television viewers have to switch back and forth between the primary television program and the information provided by the Internet

In document "Visual SyncAR breaks the fourth wall, brings TV content into your living room" published on 18-02-2013, XP054975900, https://www.youtube.com/watch?v=8NHw9Wu0CLw, an augmented reality method is disclosed in which a portable device captures the view of both a television set at its nearby environment. The captured image is then augmented.

The object of the invention is to provide a method and a system for augmenting television watching experience.

The object of the invention is solved with the features of the independent claims. Dependent claims refer to preferred embodiments.

The invention relates to a method for augmenting television watching experience comprising the steps as disclosed in claim 1.

Preferably, the virtual screen can be a geometrical surface in virtual space, e.g. a square, circle, ellipse or trapezoid.

Preferably, the virtual screen can be a virtual object that occupies virtual space in a virtual reality. The virtual screen can be invisible in the actual view on the real world but can be seen in the augmented reality environment through a display unit of a mobile terminal.

Preferably, the mobile terminal can be a portable electronic device, for example a mobile phone, a personal digital assistant, a tablet personal computer, or augmented reality glass.

Preferably, the display unit can comprise a flat panel display, such as a liquid-crystal display or the like. The display unit can comprise a touch-sensitive layer configured to be controlled by a simple or multi-touch gesture by touching the screen with a stylus and/or pen and/or one or more fingers.

Preferably, the display unit can be translucent, e.g. transparent to a certain degree. The translucent display unit can be configured to let pass light from the real environment through the display unit. Preferably, the display unit comprises a micro-projector and/or light emitter configured to project virtual content directly on the display unit to optically fuse virtual and real content.

According to an embodiment of the invention, the virtual screen and the virtual content are generated upon a user request to generate virtual content.

Preferably, when receiving a request, information can be obtained from a respective source, e.g. the internet, by the method as well as a corresponding system. Preferably, the information can be stored within a memory unit, wherein the memory unit is preferably included in the mobile terminal. Preferably, upon receipt of a request for information about the program content, a query may be send through the Internet, for example by accessing social networks and/or websites such as blogs or Wikipedia (www. wikipedia.com).

According to an embodiment of the invention, the method further comprises the step of registering and aligning the at least one virtual screen to a tangible surface in the nearby environment of the television set.

Preferably, the tangible surface can be any physical surface in real world, for example a desk surface, a wall, a picture, a paper, a book cover, a computer monitor screen and/or a photo frame.

Preferably, when the requested information is obtained, the information may be used to relocate and reshape the selected virtual screen. The information about the program content may also be displayed on virtual screen which is overlaid on the real view of the television environment through the display unit of mobile terminal. For example, the brief introduction of the current program broadcasted on the television set may be displayed on a virtual screen that is projected on the real photo frame on the wall by looking through the display unit of mobile terminal that is pointing to the television set.

Preferably, by selecting a virtual screen through the display unit of the mobile terminal using one or more fingers, a user can move and translate the virtual screen on virtual space by moving and dragging the selected virtual screen on the display unit of mobile terminal.

Preferably, when the tangible surface the virtual screen is aligned with is moved in the real world, the virtual screen is moved synchronously. In other words, in one embodiment, when a physical tangible surface moves in real world, the virtual screen registered with the tangible surface also moves along with the tangible surface.

According to an embodiment of the invention, the method further comprises the step of moving and/or relocating and/or reshaping the at least one virtual screen in the fused augmented view.

According to an embodiment of the invention, a television broadcast is received by a receiving unit of the mobile terminal and is displayed on another virtual screen in the augmented view, preferably on a virtual screen aligned with the real screen of the television set. In other words, the television program can be watched on the screen of the television set. The television program can also be projected and watched on a virtual screen, which does not exist in real world and is only visibly seen through the augmented reality system.

According to an embodiment of the invention, the virtual content comprises at least one of the following: television broadcast, text, image, video, chat conversation. In other words, virtual content can comprise any media, e.g. text, images, audio wave, and video.

Preferably, virtual content can also comprise the brief introduction of the current television program and/or additional information behind the scene.

Preferably, virtual content can also comprise the immediate messages that the user is chatting with other peoples.

According to an embodiment of the invention, the step of registering and aligning the at least one virtual screen or the step of moving and/or relocating and/or reshaping the at least one virtual screen comprises the routine of generating an environment model and mapping the relation between the at least one virtual screen and the tangible surface.

Preferably, the mobile terminal with the first acquisition unit can be used to generate the environment model. Visual features in images captured by the first acquisition unit can be extracted and tracked for mapping between different images captured by the first acquisition unit from different points of view. The corresponding relationship of features can be obtained to generate/reconstruct the environment model. Preferably, Scale-Invariant Feature Transform (SIFT) and/or Speeded Up Robust Features (SURF) method can be used to extract and track features in images. Compensation technologies including Simultaneous Localization and Mapping (SLAM) can also be used. One example of SLAM is disclosed in U.S. Pat. No. 7774, 158, titled ""Systems and Methods for Landmark Generation for Visual Simultaneous Localization and Mapping".

According to an embodiment of the invention, the method further comprises the step of recognizing at least one gesture of a user and assigning the gesture with a predefined command and/or virtual screen.

Preferably, the gesture can be the movement and/or the rotation of the mobile terminal and/or the physically touching the display unit, a touch with one or more fingers or a stylus or a pen on the touchscreen of the display unit.

Preferably, the gesture can be pointing to a specific location of the touchscreen or and moving a finger along a specific path.

Preferably, the gesture can be recognized by a camera and/or at least one proximity sensor and/or an infrared red grid and can be performed in proximity to the touchscreen. The gesture can also be eye movement and can be detected by, e.g. a camera.

Preferably, the gesture can be mouse input and/or keyboard inputs, touching input, and/or motion sensing input.

Preferably, the recognition of the gesture can also comprise the identification of the gesture and the interactively finishing of a related a predefined action. In this way, the user is able to create a virtual screen in the air using his/her fingers.

Preferably, the predefined command can comprise aligning, relocating, reshaping and/or changing the size of the at least one virtual screen.

Preferably, by assigning the gesture with a virtual screen, the user may assign the virtual screen to display specified virtual contents. For example, the user may select a virtual screen to show a brief introduction of actors and actresses while using another virtual screen to browse reviews and/or discuss the television program in social networks.

Preferably, the user may query the system using a predefined gesture to perform predefined actions. For instance, a user may point a selected virtual screen with his or her finger and then moves the virtual screen to other locations in three-dimensional virtual world by moving his or her pointing finger. A user may also slide his or her finger from television set to a virtual screen to duplicate the program broadcasted on television to virtual screen.

The invention also relates to a system for augmenting television watching experience as disclosed in claim 10.

According to an embodiment of the invention, the system further comprises a computing system, wherein at least one of the virtual screen generating unit, the virtual content generating unit and the augmented view creating unit is comprised in the mobile terminal or in the computing system.

According to an embodiment of the invention, the mobile terminal comprises a processing unit. Preferably, the virtual screen generating unit, the virtual content generating unit and/or the augmented view creating unit are comprised in the processing unit.

Preferably, the first acquisition unit comprises a room-facing camera configured to capture the view of the television set and its nearby environment.

Preferably, the first acquisition unit comprises a depth camera configured to obtain a depth map of the environment. The depth camera can be a time-of-flight camera using infrared light pulse and/or laser beam. The depth camera can use a time-of-flight method to emit infrared light pulse and capture the corresponding light to measure the time of light traveling the distance twice. The depth camera can also be based on LIDAR technology as a remote sensing technology that is configured to measure distance by illuminating a target with a laser and analyzes the reflected light. The depth camera can also use structured light using light coding technology to measure the distance according to the deformation of predefined light pattern.

Preferably, the first acquisition unit comprises one or more cameras configured to capture the environment/the scene from different angles to obtain visual stereo images to evaluate depth information.

Preferably, the computing system can be comprised in the mobile terminal. Alternatively, the computing system can be remote from the mobile terminal, e.g. a server unit or a remote processing unit. Preferably one or more of the virtual screen generating unit, virtual content generating unit and the augmented view creating unit is comprised in the mobile terminal and the rest of the virtual screen generating unit, virtual content generating unit and the augmented view creating unit is comprised in a computing system being remotely connected to the mobile terminal, e.g. via the Internet, a wireless local area connection, Bluetooth or the like.

According to an embodiment of the invention, the system is configured to receive a user request to generate virtual content and wherein the virtual screen generating unit is configured to generate the at least one virtual screen upon said request and the virtual content generating unit is configured to generate the virtual content upon said request.

According to an embodiment of the invention, the system further comprises an aligning unit configured to register and align the at least one virtual screen to a tangible surface in the nearby environment of the television set.

Preferably, the system further comprises at least one location and/or orientation sensor. Preferably, the at least one location and/or orientation sensor is configured to obtain pose information on the mobile terminal. Preferably, the at least one location and/or orientation sensor can be included in the mobile terminal. With the at least one location and/or orientation sensor the mobile terminal can be tracked and/or its pose information such as position and orientation can be estimated to determine where and how to overlay virtual content onto current view on the display unit. Preferably the at least one location and/or orientation sensor can be a gyrosensor, a magnetometer, an accelerometer, and/or global positioning sensor, e.g. a GPS sensor. Preferably, The at least one location and/or orientation sensor is configured to measure the position, orientation, and/or acceleration preferably, including pitch, roll and yaw of the mobile terminal. The output results from the at least one location and/or orientation sensor can comprise position, angle, and/or acceleration of the mobile terminal and is configured to be used to align virtual content with the respective physical tangible surface. When a user moves and/or rotates the mobile terminal, actual real view through display unit changes. The at least one location and/or orientation sensor is configured to measure pose changes of the mobile terminal. Said information on the pose change can be used to update the rendering of virtual content so as to align virtual content with changed real view.

Preferably, differential GPS and real-time kinematics can be used to improve the positioning accuracy.

According to an embodiment of the invention, the aligning unit is configured to move and/or relocate and/or reshape the virtual screen in the fused augmented view.

According to an embodiment of the invention, the system further comprises a second acquisition unit configured to capture at least one gesture of a user of the system and further comprises a gesture assigning unit configured to assign the at least one gesture of a user and assigning the at least one gesture with a predefined command and/or virtual screen.

Preferably, the second acquisition unit is configured to receive the user request to generate virtual content.

Preferably, the second acquisition unit can comprise a user-facing camera configured to capture a user gesture, e.g. a facial motion or hand motion of the user.

Preferably, the second acquisition unit can comprise an interactive interface, e.g. a mouse, a keyboard, and/or dial-keys. Preferably the second acquisition unit can be configured as a touch-sensitive layer comprised in the display unit.

According to an embodiment of the invention, the alignment unit comprises a routine unit configured to generate an environment model and configured to map the relation between the at least one virtual screen and the tangible surface.

Preferably, depth information from the depth camera and/or pose information from the at least one sensor can be used to improve the accuracy of the environment model.

With this invention, the method and system for augmenting television watching experience are able to identify the location of virtual auxiliary contents in three-dimensional space and enable virtual contents to be aligned to predefined virtual screens. Virtual content seen through the display unit of the mobile terminal is displayed on the virtual screen and appears as secondary screens of the original television screen in the user's field of view.

Preferably, the mobile terminal can comprise a communication unit being configured to communicate with a remote computing system. The communication unit can be a wireless adapter. The communication unit can be configured to communicate wirelessly with a remote computing system, e.g. through Wireless Local Area Networks (WLAN) such as Bluetooth and UWB, Wireless Personal Area Networks (WPAN) such as Bluetooth and ZigBee, and/or other Wireless Wide Area Networks (WWAN) such as 2G GSM, 2G CDMA, 2.5 GPRS, 3G UMTS, 4G LTE.

Using the features of the present invention, the augmented reality method and system are both able to augment television watching experience. The method and system enables a user to create and design a virtual screen to register and align the virtual screen to a tangible surface wherein the virtual screen can be seen through the display unit of the mobile terminal. With the present invention, a camera/acquisition unit captures the real environment and the virtual screen is fused with captured video in real time. The method and system are able to display virtual contents in response to user information request on a virtual screen. For example, a user may want to know the cast list of the movie he/she is watching, and both the method and system are able to search the information through the Internet and display the information on a virtual screen overlaid alongside the view of real television set. The system also enables user to interactively move and relocate the virtual screens in virtual space so as to arrange virtual screens in a preferable way around the television set.

In accordance with an aspect of the present invention, a system for presenting an augmented reality environment for television watching is provided. The system comprises a mobile terminal which comprises a processing unit, a camera, a display unit and at least one sensor. The camera is configured to capture the view of the television set and the nearby environment of the television set. The mobile processing unit can generate the virtual content according to the pose information evaluated by sensors. The display unit fuses together the real contents captured by the camera and virtual content from the processing unit to provide an augmented television watching experience.

In accordance with an aspect of the present invention, a method for presenting an augmented reality environment for television watching is provided. The method comprises: (a) receiving a request for information with regard to the television program; (b) searching for a response to the request for information; (c) displaying the virtual content corresponding to the request on the virtual screen; (d) overlaying the virtual screen on the real view of television watching environment captured from the camera.

### BRIEF DESCRIPTION OF THE DRAWINGS

- Fig. 1: shows a schematic diagram of a system for augmenting television watching experience according to an embodiment of the invention;
- Fig. 2: shows a schematic diagram of a fused augmented view with a system for augmenting television watching experience according to an embodiment of the invention;
- Fig. 3a: shows a schematic diagram of a system for augmenting television watching experience according to another embodiment of the invention;
- Fig. 3b: shows a schematic diagram of a fused augmented view with the system for augmenting television watching experience according to the embodiment of the invention as shown in Fig. 3a;
- Fig. 4: shows a schematic diagram of a mobile terminal according to an embodiment of the invention;
- Fig. 5: shows a schematic diagram of a mobile terminal and a computing system according to another embodiment of the invention;
- Fig. 6: shows a schematic flowchart of the interaction of a mobile terminal and a computing system according to another embodiment of the invention;

### DETAILLED DESCRIPTION OF THE DRAWINGS

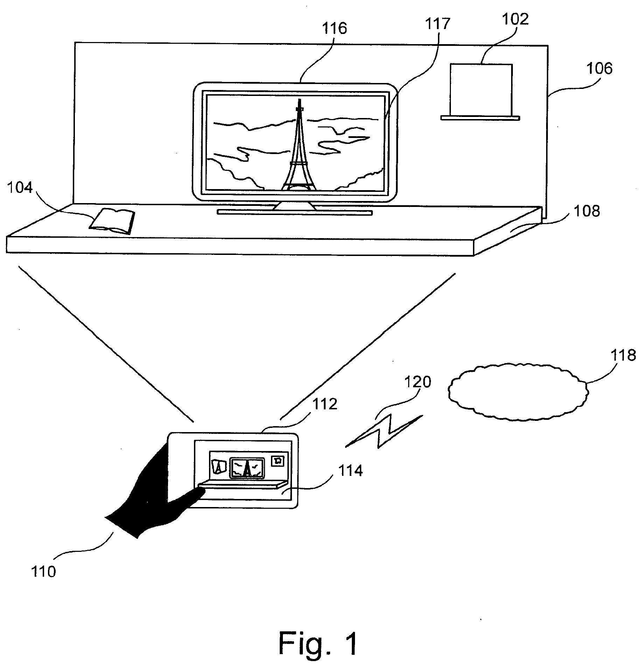

Fig. 1 shows a schematic diagram of a system 100 for augmenting television watching experience by combining virtual content and real television watching environment on a display unit 114 of a mobile terminal 112 according to an embodiment of the invention. A user 110 holds the mobile terminal 112 and points it to the television set 116 which is displaying broadcasted program content 117. The television set is placed on a sideboard 108 in front of a wall 106. A photo frame 102 is hanging on the wall 106 and a book 104 is lying on the sideboard 108.

The mobile terminal 112 captures the view of the television set 116 and its nearby environment, i.e. the wall 106, the photo frame 102, the book 104 and the sideboard and displays the view on the display unit 114 of the mobile terminal. The user 110 can sees the view of the television environment through the display unit 114 of the mobile terminal 112.

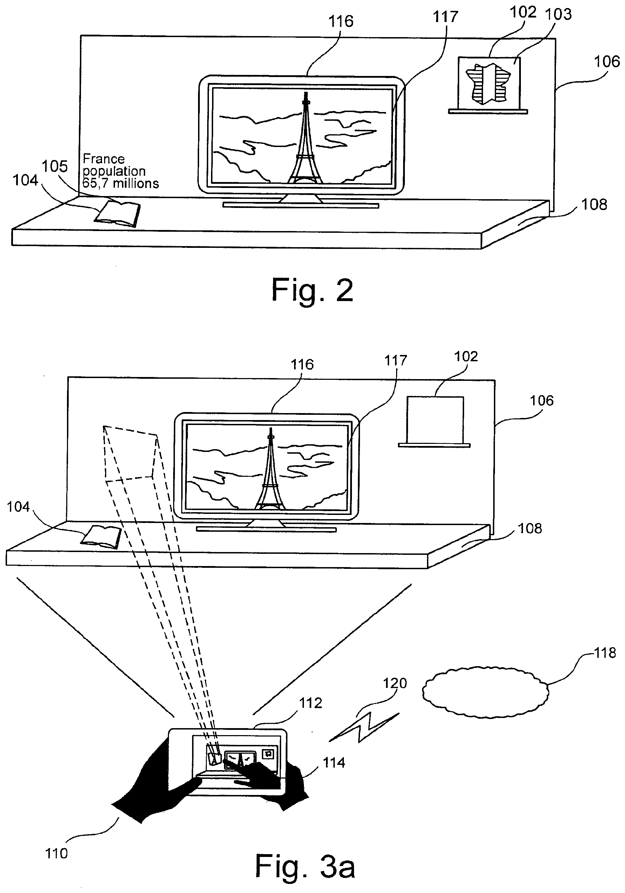

In addition to said captured view, virtual content is overlaid on the view of television environment on the display unit 114 to augment the television watching experience. Said fused augmented view is described in detail in Fig. 2.

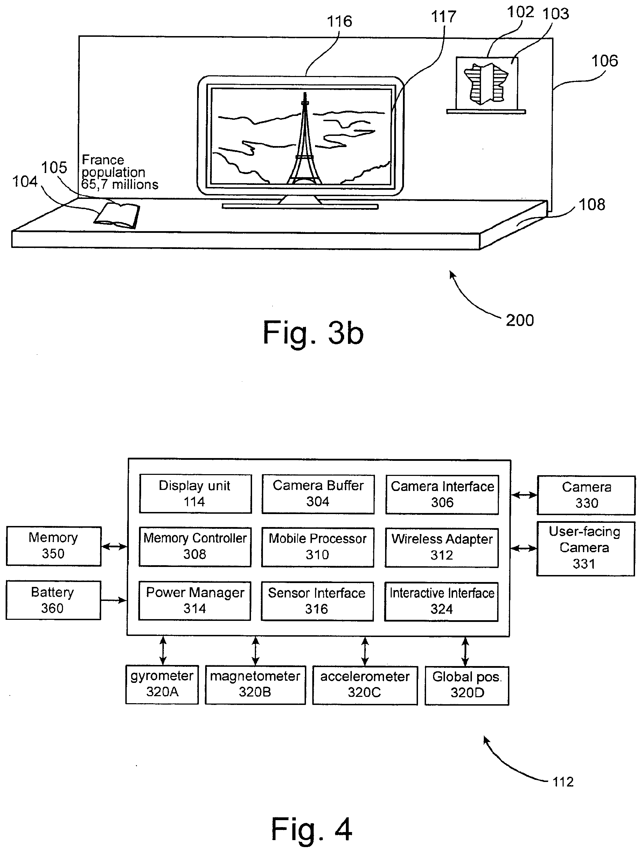

As can be seen in FIG. 1, the mobile terminal 112 is in communication with an external computing system 118 through a communication link 120. An example for the interaction between the mobile terminal 112 and the computing system 118 will be described in detail in Fig. 4 to 6.

It is understood that the computing system 118 can also be integrated into mobile terminal 112 and the communication link 120 is omitted or still required as data link to transfer information from Internet or other data sources.

Fig. 2 shows a schematic diagram of a fused augmented view with a system for augmenting television watching experience according to another embodiment of the invention. The fused augmented view is displayed on the display unit 114 of the mobile terminal 112.

The tangible, physical surfaces of the photo frame 102 and the book 104 are used as surfaces virtual screens are aligned with. A first virtual screen 103 is generated and is aligned with the photo frame 102 and a second virtual screen 105 is generated and is aligned with the book 104. An interactive map of France is displayed as virtual content on the first virtual screen 103 and text information on France is displayed.

In this embodiment, the program content of the current television program on France is displayed on the screen 117 of the television set 116.

When the user 110 moves the position of the book 104 in real world, virtual content 105 on the virtual unit registered with the book 104 also moves in virtual space to align with the book 104.

Also in this embodiment, the mobile terminal 112 is in communication with an external computing system 118 through a communication link 120.

Fig. 3a shows a schematic diagram of a system for augmenting television watching experience according to another embodiment of the invention. In this embodiment, in addition to the first and second virtual screen 103 and 104 shown in Fig. 2, the user creates a third virtual screen 220 with a predefined gesture, a gesture with his fingers in this case, wherein the virtual screen is not aligned with any tangible surface but placed in front of the wall 106.

Fig. 3b shows a schematic diagram of a fused augmented view with the system for augmenting television watching experience according to the embodiment of the invention as shown in Fig. 3a. The fused augmented view is displayed on the display unit 114 of the mobile terminal 112 as the fused augmented view as shown in Fig. 2. In addition to the first two virtual screens 103 and 104 as shown in Fig. 2 and 3, the third virtual screen 220 displays virtual content 221 also related to the current television program.

Fig. 4 shows a schematic diagram of a mobile terminal according to an embodiment of the invention.

The mobile terminal 112 comprises a room-facing camera 330 as a first acquisition unit configured to capture the view of the view of the television set 116 and its nearby environment. The captured image data will be transmitted through a camera interface 206 to be temporally stored in a camera buffer 304 or persistently store in the memory 350 through the memory controller 308.

The mobile terminal 112 further comprises a user-facing camera 331 as a second acquisition unit configured to capture a user gesture, e.g. a facial motion or hand motion of the user.

The mobile terminal 112 with the first acquisition unit are used to generate the environment model. Visual features in images captured by the first acquisition unit are extracted and tracked for mapping between different images captured by the first acquisition unit from different points of view. The corresponding relationship of features is obtained to generate/reconstruct the environment model. Preferably, Scale-Invariant Feature Transform (SIFT) and/or Speeded Up Robust Features (SURF) method can be used to extract and track features in images. Compensation technologies including Simultaneous Localization and Mapping (SLAM) can also be used. One example of SLAM is disclosed in U.S. Pat. No. 7774, 158, entitled ""Systems and Methods for Landmark Generation for Visual Simultaneous Localization and Mapping".

In this embodiment, the mobile terminal further comprises location and orientation sensors such as a gyrometer 320A, a magnetometer 320B, an accelerometer 320C, and global positioning sensor 320D. The location and orientation sensors are used to improve the accuracy of the environment model. Said sensors measure the position, orientation, and acceleration including pitch, roll and yaw of the mobile terminal 112. The output results from sensors including position, angle, accelerations, and the like are used to align virtual content with the corresponding physical tangible surface. When a user moves and/or rotates the mobile terminal 112, the actual real view through display unit 114 changes. Said sensors measure the pose changes of mobile terminal 112 to update the rendering of virtual content so as to align virtual content with changed real view. The data captured by the sensors will be transmitted to a sensor interface 316 and will then be directed to the mobile processor for the respective processing.

As discussed above, the mobile terminal 112 further comprises a display unit 114 configured to display the image data flushed from camera buffer 304. In addition, information can be displayed on the display unit 114 and the user is able to browse the information displayed on the display unit 114. The user is also able to watch the actual live view of the television environment through the display unit 114 by turning the mobile terminal 112 on and pointing the camera 330 to record the real environment. Further, the actual live view can be fused with virtual screens displaying virtual contents to an augmented live on the display unit 114.

The mobile terminal 112 further comprises an interactive interface 324, i.e. a virtual keyboard displayed on the display unit 114 on user request. The display unit 114 comprises a touch-sensitive layer to enable user to interact with display unit 114 through simple or multi-couch gestures by touching on the virtual keyboard displayed on the display unit with one or more fingers or a stylus.

The mobile terminal 112 comprises a communication unit 312 - a wireless adapter in the present embodiment. The communication unit 312 communicates with computing system 118. The mobile terminal further comprises a processing unit 310. The processing unit 310 comprises a virtual screen generating unit, a virtual content generating unit and an augmented view creating unit (not shown). The virtual screen generating unit generates the virtual screens 103, 104and 220, the virtual content generating unit generates the virtual content for the virtual screens 103, 104and 220 and the augmented view creating unit creates the augmented view comprising the fusion of the real content of the captured view and the virtual screens 103, 104, and 220.

Further, the mobile terminal 112 comprises a battery 360 and a power manager 314 for supplying the mobile terminal 112 with energy.

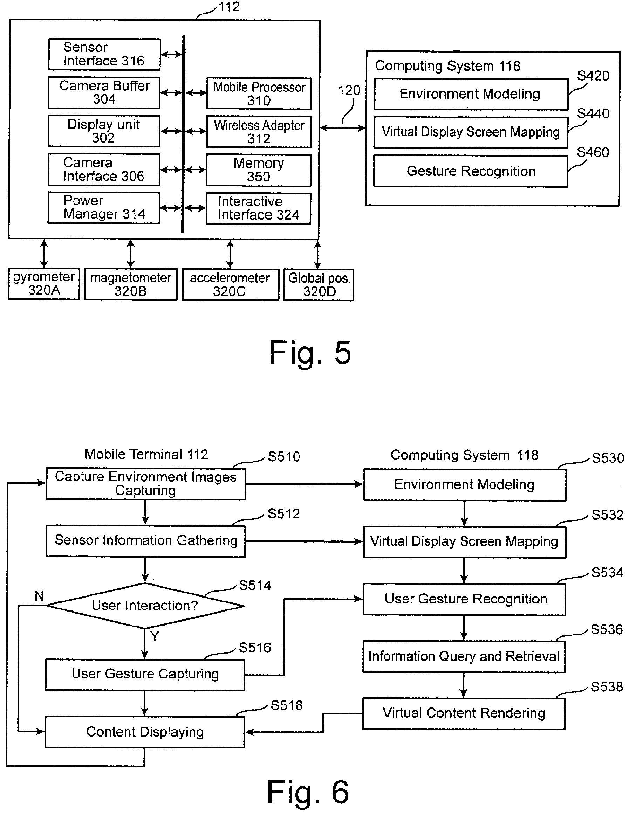

Fig. 5 shows a schematic diagram of a mobile terminal and a computing system according to another embodiment of the invention.

The images and depth information stored in the camera buffer 304 and memory 350 captured by the camera 330 are compressed and packed by the mobile processor 310. The packaged data is transmitted by the communication unit 312 through a communication link 120 to the remote computing system 118. The sensor information from the sensors 320A to D including information on position, orientation, and/or acceleration of mobile terminal 112 are also transmitted from the sensor interface 316 to the computing system 118 via the communication link 120. As an example, the data is transmitted at rate of 30 times per second. The computing system 118 analyzes and deals with the visual and depth images and sensor data to complete computational intensive tasks including for example gesture recognition, environment recognition, and virtual content rendering.

The computing system 118 transmits back the analyzed and processed results to mobile terminal 112 via the communication link 120 for displaying and eventually further processing.

In the embodiment as shown in Fig. 5, the computing system 118 renders the virtual content according to the pose information transmitted by the mobile terminal 112 and the computing system 118 aligns and fuses the virtual content with the real content captured by the camera 330 to fused augmented images. Fused augmented images are transmitted back to the mobile terminal 112 via the communication link 120. The fused augmented images are then displayed on the display unit 114.

In the embodiment as shown in Fig. 5, also the user gestures captured by the user facing camera 310 are transmitted to the computing system 118 via the communication link 120 for gesture recognition. Examples of a recognized gesture may be a user-request to trigger a predefined action for example creating a virtual screen 103, 104, 220 or updating virtual content. Generated and/or updated results are sent back to the mobile terminal 112 through the communication link 120 and displayed on the display unit 114. In this embodiment as shown in Fig. 5, the mobile terminal 112 acts as a thin client for lightweight tasks including for example image and data capturing, interaction interface and content display to relief hardware and software requirements of the mobile terminal 112.

For the gesture recognition, the computing system 118 comprises a gesture recognition module 460 to capture user gesture from the visual and depth images captured by the camera 330 and transmitted from the mobile device 112 to the computing system 118. The gesture recognition module 460 operates according to any of various known technologies, for example the gesture recognition as disclosed in U.S patent application Ser. No. 12/422611 titled "Gesture Recognition System Architecture," filed on Apr. 12, 2009 or U.S patent application Ser. No. 12/391150, titled "Standard Gesture," filed on May 29, 2009.

The computing system 118 comprises an environment modeling module 420. The module 420 uses visual images and depth images captured from the camera 330 as well as the pose information from the sensors 320 A to D to create an environmental model of television watching environment. It is understood that the pose information can also be omitted to create an environment model. The environmental model does not need to be photorealistic. It may be the form of for example cloud points, line model, or surface model without material, texture, and possibly even geometric details.

Features including edges, faces, and the like in the images captured by the camera 330 are extracted and tracked to obtain point corresponding relationship between images in series.

The point corresponding relationship is related to the tracking of the same feature point in a series of captured images. For example, if the user moves the mobile terminal 112 including a camera 330, the feature point detected in a previous captured image will change its position in a current captured image. The chosen feature point can be tracked in the captured images to evaluate user's pose information according to the change of the position of the feature point.

The above explained SIFT or SURF methods can be used to visually extract and track features in the images. The point corresponding relationship can be used as three-dimensional clues to create/reconstruct environmental model skipping the manual modeling stage. In addition, a compensation technology, for example Simultaneous Localization and Mapping (SLAM), can be used. Further, the depth information can also be used along or in cooperation with the visual image reconstruction method to improve the accuracy of the environmental model.

The computing system 118 also comprises a virtual screen mapping module 440. The module 440 uses the feature corresponding relationship resolved from visual images captured by the camera 330 and pose information from at least one of the sensors 320 A to D to obtain a projection matrix. The virtual screen is projected by the projection matrix into the view space of the real environment. The projected virtual screen is registered and aligned with a respective physical tangible surface in the real world. The module 440 determines the mapping relationship between the virtual screen and the real tangible surface. Therefore, in one embodiment, when the physical tangible surface moves, the mapped and aligned corresponding virtual screen also moves in virtual space.

Moreover, in the embodiment as shown in Fig. 5, the gesture recognition module 460 can interact with the virtual screen mapping module 440. For example, the gesture recognition module 460 can copy the program content of the screen 117 of the television set 116 to another virtual screen aligned with a respective physical tangible surface. For example, user gestures including for example finger pointing and sliding in view of the camera 330 are captured and then transmitted to the computing system 118 via the communication link 120. The gesture recognition module 460 resolves and recognizes the user gestures as an action of program copy when the module 460 recognizes that user performs a slide movement of his or her fingers from a television set 116 to any physical tangible surface aligned and mapped with the respective virtual screen.

Fig. 6 shows the schematic flowchart of the interaction of the mobile terminal 112 and the computing system 118 according to another embodiment of the invention. The transmission between the mobile terminal 112 and the computing system 118 and vice versa may be performed periodically with a period of one frame being necessary to generate, render, and display a real and virtual contents fused image. For example, the transmission may be updated 30 frames per second, although it may be refreshed at a higher or lower rate in other embodiments.

In step S510, the camera 330 records the live video of the television watching environment. The live video can also include depth information from an additional depth camera also comprised in the first acquisition unit. The captured video is then stored in the camera buffer 304 and transmitted to the computing system 118 via the communication link 120. The video coding and decoding can for example be performed using the MPEG and H.26X standard to reduce the amount of data to be transmitted mobile the mobile terminal 112 and the computing system 118.

The environment modeling module 420 obtains the images sent from the mobile terminal 114 to the computing system 118 in step S530. The environment modeling module 420 extracts features points in the images in order to obtain a feature point cloud. The environment modeling module 420 therefore uses at least one known algorithm, e.g. SIFT and/or SURF methods. Once the environment modeling module 420 is able to identify the same feature points in the sequence of images, feature point, the corresponding relationship is resolved to generate a geometry environmental model. The environmental model can then be used for the virtual screen registration, for example.

In general, the computing system 118 generates an environmental model including the spatial position of x-, y-, and z-coordinated of the television watching environment and objects in the environment such as the television set 116 and tangible surfaces including the photo frame 102 and the book 104.

At least one of the sensors 320A to D comprised in the mobile terminal 112 measures the pose information of the mobile terminal 112 such as the position and the orientation of the mobile terminal 112 in step S512. The pose information is transmitted to the computing system 118, in particular to the virtual screen mapping module 440, via the communication link 120 and used to evaluate the projection matrix of the camera 330 in virtual space. In step S532, the virtual screen mapping module 440 registers the at least one virtual screen to the respective real tangible surface. In this embodiment, the registered virtual screen is aligned with the respective physical tangible surface no matter if the physical tangible surface is in or out of the field of view of the camera 330 after alignment.

Once a user interaction is detected in S514, the user gestures are captured by the camera 330 and transmitted to the computing system 118 for gesture recognition by the user gesture recognition module 460 in the step S534.

The recognized gestures are analyzed and can be used as a user-request to trigger a predefined action in step S536. For example, the action may comprise a sequence of sub-actions to create a new virtual screen and align the virtual screen with a respective physical tangible surface. The action may also lead to copying program contents between a real television screen and a virtual screen. In addition, the computing system 118 can be connected to a website which contains additional content including for example a program list, information behind the scene, introduction of actors and actresses, and the like. An example of website that may be used is www.wikipedia.com. The computing system 118 may also be configured to search the Internet, e.g. using a search engine like Google, to obtain relevant information. The user can also input a request to access a website in the interactive interface 324 which is then submitted to the computing system 118 in order to obtain information related to this request. The retrieved information are used to update the virtual content rendering in step S538.

Retrieved information may include text, image, video clip, and the like. Information may be formatted as texture content. For example, text information is rasterized as an image and then used as texture images for mapping. Video clips may be decoded into a sequence of static images as animating texture. Texture mapping coordinates are generated on local coordination of the virtual screen to map formatted information onto the virtual screen 112.

For example, the local texture coordinates starting from the left bottom corner points and the rest corner points in anticlockwise sequence have texture coordinates. For another example, a two dimensional Oriented Bounding Box (OBB) of virtual screen is calculated and its corner points are mapped with corner points of the texture image anticlockwise. The resulting virtual screen which is textured with formatted information may be rendered and then fused with view of real contents.

The fused augmented view is sent back to the display device 114 of the mobile terminal 112 for being updated and displayed in step S518.

While the invention has been illustrated and described in detail in the drawings and foregoing description, such illustration and description are to be considered illustrative or exemplary and non-restrictive; the invention is thus not limited to the disclosed embodiments. Variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality and may mean "at least one".

## Claims

1. Computer-implemented method for augmenting television watching experience comprising the following steps in the following order:
a) capturing the view of a television set and the nearby environment of the television set wherein the nearby environment comprises at least one tangible surface;
b) generating at least one virtual screen to be displayed on a display unit of a mobile terminal;
c) generating virtual content for the at least one virtual screen;
d) creating an augmented view comprising the fusion of the real content of the captured view and the at least one virtual screen; and
e) displaying the fused augmented view on the display unit of the mobile terminal, further comprising the step of registering and aligning the at least one virtual screen to a tangible surface in the nearby environment of the television set,
further comprising the step of recognizing at least one gesture of a user and assigning the gesture with a predefined command and/or virtual screen and
further comprising the step of moving and/or relocating and/or reshaping the at least one virtual screen in the fused augmented view, based on said recognized at least one gesture of a user.

2. Method according to claim 1, wherein the virtual screen and the virtual content are generated upon a user request to generate virtual content.

3. Method according to claim 1 or 2, wherein a television broadcast is received by a receiving unit of the mobile terminal and is displayed on another virtual screen in the augmented view, preferably on a virtual screen aligned with the real screen of the television set.

4. Method according to any of claims 1 to 3, wherein the virtual content comprises at least one of the following: television broadcast, text, image, video, chat conversation.

5. Method according to any of claims 1 to 4, wherein the step of registering and aligning the at least one virtual screen or the step of moving and/or relocating and/or reshaping the at least one virtual screen comprises the routine of generating an environment model and mapping the relation between the at least one virtual screen and the related tangible surface.

6. Method according to any of claims 1 to 5, wherein the recognition of the gesture comprises identification of the gesture and the interactively finishing of a related predefined action.

7. Method according to any of claims 1 to 6, further comprising the step of moving the virtual screen registered with the tangible surface along with the tangible surface when the tangible surface moves in real world.

8. Method according to any of claims 1 to 7, wherein an obtained requested information is used to relocate and reshape a selected virtual screen.

9. Method according to any of claims 1 to 8, wherein a query is issued by using a predefined gesture to perform predefined actions.

10. System for augmenting television watching experience comprising:
a mobile terminal comprising a first acquisition unit configured to capture the view of a television set and the nearby environment of the television set;
a virtual screen generating unit configured to generate at least one virtual screen to be displayed on a display unit of the mobile terminal;
a virtual content generating unit configured to generate virtual content for the at least one virtual screen; and
an augmented view creating unit configured to create an augmented view comprising the fusion of the real content of the captured view and the at least one virtual screen, wherein the display unit is further configured to display the fused augmented view on the screen of the mobile terminal, further comprising an aligning unit configured to register and align the at least one virtual screen to a tangible surface in the nearby environment of the television set, wherein the system further comprises a second acquisition unit configured to capture at least one gesture of a user of the system and further comprising a gesture assigning unit configured to assign the at least one gesture of a user and assigning the at least one gesture with a predefined command and/or virtual screen and wherein the aligning unit is configured to move and/or relocate and/or reshape the virtual screen in the fused augmented view, based on said at least one gesture of a user.

11. System according to claim 10, further comprising a computing system, wherein at least one of the virtual screen generating unit, virtual content generating unit and the augmented view creating unit is comprised in the mobile terminal or in the computing system.

12. System according to claim 10 or 11, being configured to receive a user request to generate virtual content and wherein the virtual screen generating unit is configured to generate the at least one virtual screen upon said request and the virtual content generating unit configured to generate the virtual content upon said request.

13. System according to claim 10 or 12, wherein the alignment unit comprises a routine unit configured to generate an environment model and configured to map the relation between the at least one virtual screen and the related tangible surface.

## Patentansprüche

1. Computerimplementiertes Verfahren zum Erweitern der Fernseherfahrung, das die folgenden Schritte in der folgenden Reihenfolge aufweist:
a) Aufnehmen der Ansicht eines Fernsehgeräts und der näheren Umgebung des Fernsehgeräts, wobei die nähere Umgebung mindestens eine dingliche Oberfläche aufweist;
b) Erzeugen von mindestens einem virtuellen Bildschirm, der auf einer Anzeigeeinheit eines mobilen Endgeräts angezeigt werden soll;
c) Erzeugen eines virtuellen Inhalts für den mindestens einen virtuellen Bildschirm;
d) Erzeugen einer erweiterten Ansicht, die die Verschmelzung des realen Inhalts der aufgenommenen Ansicht und des mindestens einen virtuellen Bildschirms aufweist; und
e) Anzeigen der verschmolzenen erweiterten Ansicht auf der Anzeigeeinheit des mobilen Endgeräts, das ferner den Schritt des Registrierens und Ausrichtens des mindestens einen virtuellen Bildschirms mit einer dinglichen Oberfläche in der näheren Umgebung des Fernsehgeräts aufweist,
das ferner den Schritt des Erkennens mindestens einer Geste eines Benutzers und des Zuordnens der Geste zu einem vordefinierten Befehl und/oder virtuellen Bildschirm aufweist und
das ferner den Schritt des Bewegens und/oder des Verschiebens und/oder Umformens des mindestens einen virtuellen Bildschirms in der verschmolzenen erweiterten Ansicht beruhend auf der erkannten mindestens einen Geste eines Benutzers aufweist.

2. Verfahren nach Anspruch 1, wobei der virtuelle Bildschirm und der virtuelle Inhalt bei einer Benutzeranfrage erzeugt werden, den virtuellen Inhalt zu erzeugen.

3. Verfahren nach Anspruch 1 oder 2, wobei eine Fernsehsendung durch eine Empfangseinheit des mobilen Endgeräts empfangen wird und auf einem anderen virtuellen Bildschirm in der erweiterten Ansicht angezeigt wird, vorzugsweise auf einem virtuellen Bildschirm, der mit dem realen Bildschirm des Fernsehgeräts ausgerichtet ist.

4. Verfahren nach einem der Ansprüche 1 bis 3, wobei der virtuelle Inhalt mindestens eines des Folgenden aufweist: eine Fernsehsendung, einen Text, ein Bild, ein Video, eine Internetunterhaltung.

5. Verfahren nach einem der Ansprüche 1 bis 4, wobei der Schritt des Registrierens und Ausrichtens des mindestens einen virtuellen Bildschirms oder der Schritt des Bewegens und/oder des Verschiebens und/oder Umformens des mindestens einen virtuellen Bildschirms die Routine des Erzeugens eines Umgebungsmodells und des Abbildens der Beziehung zwischen dem mindestens einen virtuellen Bildschirm und der verknüpften dinglichen Oberfläche aufweist.

6. Verfahren nach einem der Ansprüche 1 bis 5, wobei die Erkennung der Geste die Identifikation der Geste und das interaktive Erledigen einer damit verknüpften vordefinierten Aktion aufweist.

7. Verfahren nach einem der Ansprüche 1 bis 6, das ferner den Schritt des Bewegens des mit der dinglichen Oberfläche registrierten virtuellen Bildschirms zusammen mit der dinglichen Oberfläche aufweist, wenn sich die dingliche Oberfläche in der realen Welt bewegt.

8. Verfahren nach einem der Ansprüche 1 bis 7, wobei erhaltene angeforderte Informationen verwendet werden, um einen ausgewählten virtuellen Bildschirm zu verschieben und umzuformen.

9. Verfahren nach einem der Ansprüche 1 bis 8, wobei durch Verwenden einer vordefinierten Geste eine Anfrage ausgegeben wird, vordefinierte Aktionen durchzuführen.

10. System zum Erweitern der Fernseherfahrung, das aufweist:
ein mobiles Endgerät, das eine erste Erfassungseinheit aufweist, die konfiguriert ist, die Ansicht eines Fernsehgeräts und der näheren Umgebung des Fernsehgeräts aufzunehmen;
eine Einheit zur Erzeugung eines virtuellen Bildschirms, die konfiguriert ist, mindestens einen virtuellen Bildschirm zu erzeugen, der auf einer Anzeigeeinheit des mobilen Endgeräts angezeigt werden soll;
eine Einheit zur Erzeugung eines virtuellen Inhalts, die konfiguriert ist, einen virtuellen Inhalt für den mindestens einen virtuellen Bildschirm zu erzeugen; und
eine Einheit zur Erzeugung einer erweiterten Ansicht, die konfiguriert ist, eine erweiterte Ansicht zu erzeugen, die die Verschmelzung des realen Inhalts der aufgenommenen Ansicht und des mindestens einen virtuellen Bildschirms aufweist, wobei die Anzeigeeinheit ferner konfiguriert ist, die verschmolzene erweiterte Ansicht auf dem Bildschirm des mobilen Endgeräts anzuzeigen, das ferner eine Ausrichtungseinheit aufweist, die konfiguriert ist, den mindestens einen virtuellen Bildschirm mit einer dinglichen Oberfläche in der näheren Umgebung des Fernsehgeräts zu registrieren und auszurichten, wobei das System ferner eine zweite Erfassungseinheit aufweist, die konfiguriert ist, mindestens eine Geste eines Benutzers des Systems aufzunehmen, und das ferner eine Gestenzuordnungseinheit aufweist, die konfiguriert ist, die mindestens eine Geste eines Benutzers zuzuordnen und die mindestens eine Geste einem vordefinierten Befehl und/oder einem virtuellen Bildschirm zuzuordnen und wobei die Ausrichtungseinheit konfiguriert ist, den virtuellen Bildschirm in der verschmolzenen erweiterten Ansicht beruhend auf der mindestens einen Geste eines Benutzers zu bewegen und/oder zu verschieben und/oder umzuformen.

11. System nach Anspruch 10, das ferner ein Rechensystem aufweist, wobei mindestens eine der Einheit zur Erzeugung eines virtuellen Bildschirms, der Einheit zur Erzeugung eines virtuellen Inhalts und der Einheit zur Erzeugung einer erweiterten Ansicht im mobilen Endgerät oder im Rechensystem enthalten ist.

12. System nach Anspruch 10 oder 11, das konfiguriert ist, eine Benutzeranforderung zu empfangen, einen virtuellen Inhalt zu erzeugen, und wobei die Einheit zur Erzeugung eines virtuellen Bildschirms konfiguriert ist, bei der Anforderung den mindestens einen virtuellen Bildschirms zu erzeugen, und die Einheit zur Erzeugung eines virtuellen Inhalts konfiguriert ist, bei der Anforderung den virtuellen Inhalt zu erzeugen.

13. System nach Anspruch 10 oder 12, wobei die Ausrichtungseinheit eine Routineneinheit aufweist, die konfiguriert ist, ein Umgebungsmodell zu erzeugen, und die konfiguriert ist, die Beziehung zwischen dem mindestens einen virtuellen Bildschirm und der damit verknüpften dinglichen Oberfläche abzubilden.

## Revendications

1. Procédé exécuté par ordinateur pour augmenter une expérience de visualisation de télévision, comprenant les étapes suivantes dans l'ordre suivant :
a) capture de la vue d'un téléviseur et de l'environnement proche du téléviseur, ledit environnement proche comprenant au moins une surface tangible ;
b) génération d'au moins un écran virtuel à afficher sur une unité d'affichage d'un terminal mobile ;
c) génération d'un contenu virtuel pour ledit au moins un écran virtuel ;
d) création d'une vue augmentée comprenant la fusion du contenu réel de la vue capturée et dudit au moins un écran virtuel ; et
e) affichage de la vue augmentée fusionnée sur l'unité d'affichage du terminal mobile, comprenant en outre l'étape d'enregistrement et d'alignement dudit au moins un écran virtuel avec une surface tangible dans l'environnement proche du téléviseur, comprenant en outre l'étape de reconnaissance d'au moins un geste d'un utilisateur et d'association dudit geste à une commande et/ou à un écran virtuel définis, et comprenant en outre l'étape de déplacement et/ou de relocalisation et/ou de refonte dudit au moins un écran virtuel dans la vue augmentée fusionnée, sur la base de la reconnaissance d'au moins un geste d'un utilisateur.

2. Procédé selon la revendication 1, où l'écran virtuel et le contenu virtuel sont générés par une demande d'utilisateur pour la génération d'un contenu virtuel.

3. Procédé selon la revendication 1 ou la revendication 2, où une télédiffusion est reçue par une unité de réception du terminal mobile et est affichée sur un autre écran virtuel dans la vue augmentée, préférentiellement sur un écran virtuel aligné avec l'écran réel du téléviseur.

4. Procédé selon l'une des revendications 1 à 3, où le contenu virtuel comprend au moins un des éléments suivants : télédiffusion, texte, image, vidéo, conversation en ligne.

5. Procédé selon l'une des revendications 1 à 4, où l'étape d'enregistrement et d'alignement dudit au moins un écran virtuel ou l'étape de déplacement et/ou de relocalisation et/ou de refonte dudit au moins un écran virtuel comprend la routine de génération d'un modèle d'environnement et de mappage de la relation entre ledit au moins un écran virtuel et la surface tangible correspondante.

6. Procédé selon l'une des revendications 1 à 5, où la reconnaissance du geste comprend l'identification du geste et l'accomplissement interactif d'une action définie correspondante.

7. Procédé selon l'une des revendications 1 à 6, comprenant en outre l'étape de déplacement de l'écran virtuel enregistré avec la surface tangible ainsi que de la surface tangible si la surface tangible se déplace dans le monde réel.

8. Procédé selon l'une des revendications 1 à 7, où une information demandée obtenue est exploitée pour relocaliser et refondre un écran virtuel sélectionné.

9. Procédé selon l'une des revendications 1 à 8, où une interrogation est émise au moyen d'un geste défini pour effectuer des actions définies.

10. Système pour augmenter une expérience de visualisation de télévision, comprenant :
un terminal mobile comprenant une première unité d'acquisition prévue pour capturer la vue d'un téléviseur et l'environnement proche du téléviseur ;
une unité de génération d'écran virtuel prévue pour générer au moins un écran virtuel à afficher sur une unité d'affichage du terminal mobile ;
une unité de génération de contenu virtuel prévue pour générer un contenu virtuel pour ledit au moins un écran virtuel ; et
une unité de création de vue augmentée prévue pour créer une vue augmentée comprenant la fusion du contenu réel de la vue capturée et dudit au moins un écran virtuel, l'unité d'affichage étant en outre prévue pour afficher la vue augmentée fusionnée sur l'écran du terminal mobile, comprenant en outre une unité d'alignement prévue pour enregistrer et aligner ledit au moins un écran virtuel avec une surface tangible dans l'environnement proche du téléviseur, ledit système comprenant en outre une deuxième unité d'acquisition prévue pour capturer au moins un geste d'un utilisateur du système et comprenant en outre une unité d'association de geste prévue pour associer ledit au moins un geste d'un utilisateur et associer ledit au moins un geste à une commande et/ou à un écran virtuel définis, et l'unité d'alignement étant prévue pour déplacer et/ou relocaliser et/ou refondre l'écran virtuel dans la vue augmentée fusionnée, sur la base dudit au moins un geste d'un utilisateur.

11. Système selon la revendication 10, comprenant en outre un système de calcul, au moins une unité entre l'unité de génération d'écran virtuel, l'unité de génération de contenu virtuel et l'unité de création de vue augmentée étant comprise dans le terminal mobile ou dans le système de calcul.

12. Système selon la revendication 10 ou la revendication 11, prévu pour recevoir une demande d'utilisateur pour la génération d'un contenu virtuel et où l'unité de génération d'écran virtuel est prévue pour générer ledit au moins un écran virtuel via ladite demande, et où l'unité de génération de contenu virtuel est prévue pour générer le contenu virtuel via ladite demande.

13. Système selon la revendication 10 ou la revendication 12, où l'unité d'alignement comprend une unité de routine prévue pour générer un modèle d'environnement et pour mapper la relation entre ledit au moins un écran virtuel et la surface tangible correspondante.
